# EUROPEAN PATENT APPLICATION

(11) **EP 0 687 941 A2**
(43) Date of publication of application: **20.12.1995**
(21) Application number: 95420157.0
(22) Date of filing: 14.06.1995
(51) Int. Cl.: G02F 1/37, G02F 1/05, C30B 30/00

(54) **Forming inverted ferroelectric domain regions**

(30) Priority: 16.06.1994 US 260935
(71) Applicant: EASTMAN KODAK COMPANY, Rochester, New York 14650-2201 (US)
(72) Inventor: Baron, Cynthia J., c/o Eastman Kodak Company, Rochester, New York 14650-2201 (US); Mir, Jose M., c/o Eastman Kodak Company, Rochester, New York 14650-2201 (US); Lim, Eric J., c/o Eastman Kodak Company, Rochester, New York 14650-2201 (US); Gupta, Mool C., c/o Eastman Kodak Company, Rochester, New York 14650-2201 (US)
(74) Representative: Fevrier, Murielle Françoise E.

(57) **Abstract**

A method for forming inverted ferroelectric domain regions in a substrate including ferroelectric material and having two major opposite surfaces comprising the steps of (a) chemically modifying the substrate in selected regions to inhibit subsequent nucleation and growth of selected domains; (b) applying a conductive electrode over the opposite major surfaces; and (c) providing a voltage to the conductive electrodes having a sufficient magnitude and duration to cause the ferroelectric polarization to invert in selected unmodified regions.

## Description

### Field of the Invention

The present invention relates to optoelectronic devices which use inverted ferroelectric domain structures.

### BACKGROUND OF THE INVENTION

Compact laser light sources are presently available only in near infra-red to red visible wavelengths. However, there are many applications for compact lasers in the visible spectrum i.e. 400-700 nm, which are currently being implemented using gas or larger solid state lasers due to the lack of available compact visible light sources. Coherent light in the blue wavelength range, for example, permits the optical recording density for diffraction limited focusing to be approximately four times that of current laser wavelengths. For these applications, low cost and compactness are necessary attributes. Higher resolution laser printing and displays will benefit from the economical availability of blue light sources. Several techniques to achieve compact visible laser sources are being developed for a variety of applications. In particular, the method of frequency doubling uses commercially available infra-red emitting III-V laser diodes to pump nonlinear optical crystals that can produce visible light via second harmonic generation (SHG). A convenient method to implement SHG at usable power levels, quasi-phase matching in a waveguide, has been described by Lim et al, Electronics Letters, vol. 25 1989, p. 174 and involves the use of periodically poled ferroelectric domain regions to phase match the pump and second harmonic radiations, achieving high SHG efficiencies.

Single crystal materials such as LiNbO₃ and LiTaO₃ and KTP which are used in compact optical devices such as interferometers, modulators, mode converters, scanners, polarization transformers, and can also be used as bulk or waveguide quasi-phase matched second harmonic generators. These materials have large nonlinear optical coefficients, are transparent in the visible range, and single or multi mode waveguides can be easily formed by ion exchange processes. (See Yuhuan Xu, Ferroelectric Materials and Their Applications, Elsevier Science Publishers B.V. 1991, 233). Precise formation of inverted ferroelectric domain regions (patterning of the direction of the ferroelectric polarization) in non-linear optical materials is necessary to obtain usable efficiencies in quasi-phase matched second harmonic generation. Inverted domain regions are also useful for other electro-optic devices such as modulators or scanners, and may be useful in other devices such as pyroelectric detectors, etc.

Several methods of forming inverted ferroelectric domain regions in ferroelectric materials are currently in use. A common method for ferroelectric domain inversion in ferroelectric materials is the patterned application of electric fields stronger than the materials' coercive field in the desired domain direction, achieved via patterned metal electrodes. This is performed either at room temperature or at elevated temperatures. (See "First-Order Quasi-Phase Matched LiNbO₃ Waveguide Periodically Poled by Applying an External Field for Efficient Blue Second-Harmonic Generation", M. Yamada et al, Appl. Phys. Lett. 62(5), 1 Feb. 1993, 436-436 and "Quasiphase-Matched Second Harmonic Generation of Blue Light in Electrically Periodically-Poled Lithium Tantalate Waveguides", S. Matsumoto et al, Electronic Letters, (27) 22, 24 October, 1991, 2040-2042). Another widely used method of forming inverted ferroelectric domain regions on the surfaces is to chemically alter the Curie temperature of the material by diffusion. This process is either carried out at high temperatures or is followed by a heat treatment. (See "Characteristics of Periodically Domain-Inverted LiNbO₃ and LiTaO₃ Waveguides for Second Harmonic Generation", K. Yamamoto et al, J. Appl. Phys. 70(4), 15 August 1991, 1947-1951. Other methods include unidirectional heating and simultaneous chemical treatment, ferroelectric domain inversion during growth of the crystal, or ferroelectric domain inversion by electron beam writing. (See "Quasi-phase matched second-harmonic generation of blue light in periodically poled LiNbO₃", G.A. Magel et al, Appl. Phys. Lett. 56(2) 8 January, 1990, 108-110 and U.S. Patent No. 5,150,447 Hitoshi et al, issued September 22, 1992).

Methods to invert ferroelectric domain regions by chemical diffusion or implantation processes are well known and all work using the same principle. Introducing or removing selected elements from the crystal by diffusion, implantation, etc. locally lowers the Curie temperature of the ferroelectric material. To invert the ferroelectric polarization in the selected areas, the devices are heated to a temperature that is higher than the locally lowered Curie temperature but below the Curie temperature of the bulk material. Diffusion processes such as high temperature Ti in-diffusion in LiNbO₃ as described by Lim et al, Electronics Letters, 25 (11) 731, published May 25, 1989, Li₂O outdiffusion in LiNbO₃, or proton exchange in LiTaO₃ both described by Yamamoto et al, J. Appl. Phys. 70(4) 1947, published August 15, 1991 and the latter in U.S. Patent No. 5,249,191 by Sawaki et al or ion exchange in KTP as taught by Bierlein et al in U.S. Patent No. 5,157,754 are commonly practiced. These diffusion controlled processes suffer several drawbacks. Li₂O out-diffusion and Ti in-diffusion lower the photorefractive resistance of the material. (See "Characteristics of Periodically Domain-Inverted LiNbO₃ and LiTaO₃ Waveguides for Second Harmonic Generation", K. Yamamoto et al, J. Appl. Phys. 70(4), 15 August, 1991, 1947-1951. In quasi-phase matched second harmonic generation the maximum efficiencies are achieved with vertical domain walls passing through the waveguide region. Inverted ferroelectric domain shapes produced by diffusion processes, unfortunately are shallow and triangular for LiNbO₃ or shallow and semicircular for LiTaO₃, and are not optimum for modal overlap with the waveguide, leading to built-in decreases in the conversion efficiency. Refractive indices of the materials are also altered by the chemically diffused species, and additional steps are required if a homogeneous refractive index is desired. Furthermore, precise control of the diffusion patterned inverted domain shapes and dimensions are difficult and depend on several factors including time, temperature, heating rate, amount of chemical interaction, and the material pyroelectric and piezoelectric properties. These same processes are generally also used to fabricate waveguides, and require several additional processing steps in order to maintain single mode waveguides.

Another method of fabricating inverted ferroelectric domain regions is described by Makio et al, Appl. Phys. Lett. vol. 61, p. 3077 published Dec. 28, 1992 uses proton exchange in LiTaO₃ and LiNbO₃ in conjunction with one directional heating. (See "Fabrication of periodically inverted domain structures in LiTaO₃ and LiNbO₃ using Proton Exchange" Appl. Phys. Lett, 61(26), 28 December, 1992, 3077-3079) . The stress from the proton exchange is thought to cause growth of the inverted domains under the temperature gradient. The domains are "spikelike" and originate from the proton-exchanged regions on the surface of the crystal. This method produces domains that are unstable, and under subsequent heat treatments the domain depths decrease. While the survival of domains up to 5 minutes at 380°C is sufficient to fabricate waveguides, modulation of the nonlinear coefficients and refractive index due to the introduction of protons along the length of the waveguide severely hamper SHG and increase scattering. The inverted ferroelectric domains need to extend to the surface and exhibit no variation in refractive index or degradation of nonlinear coefficients for maximum efficiency.

Electron beam bombardment in "written" patterns has been demonstrated to invert ferroelectric domain regions in LiNbO₃, as taught by Yamada et al, in Electronics Letters, (27) p 828 published 10 May 9, 1991, and U.S. Patent No. 5,249,250, LiTaO₃ as described by Hsu et al, Appl. Phys. Lett. 60(1) p 1 published January 6, 1992, and KTP as described by Gupta et al., Appl. Phys. Lett. 63(9) p 1167, published August 30, 1993. Electron beam bombardment suffers from the difficulty of producing large scale patterns, sensitivity of domain shape to processing conditions, penetration of the electron beam into the surface of the material, and surface damage due to the high fields involved, the latter of which both require removal of the surface layer prior to the waveguide fabrication for higher efficiencies.

Vertical walled inverted ferroelectric domain regions have also been demonstrated by the application of an external electric field that is higher than the coercive field of the material. Yamada et al, U.S. Patent No. 5,193,023 teach the use of patterned electrodes on a nonlinear optical ferroelectric substrate to produce inverted domain regions. In publication, Yamada et al Appl. Phys. Lett. vol. 62, No. 5, p 435 published Feb. 1, 1993 describe patterned aluminum electrodes used on LiNbO₃ to produce inverted domain regions throughout the thickness of wafers less than 500µm thick. The patterned portion of the electrode is developed on the +z face of the crystal because the inverted ferroelectric domain regions originate from the +z face. The -z face of the crystal is coated as a planar electrode. A negative pulse of 100 µsec is applied to invert the domains. The last step involves dissolving the electrodes in a suitable solution. Yamada et al reported lateral growth of the domain under the electrodes for longer pulse lengths, and in fact only short (3 mm) interaction lengths were produced. The control of the poling field pulses is critical in achieving the proper vertical walled domain pattern. The lack of longer interaction lengths are an affirmation of the irreproducibility of the process. The use of metal electrodes at extremely high fields also may cause decreased conversion efficiencies due to surface interactions.

Matsumoto et al, Electronics Letters, vol. 27, No. 22 p. 2040 published October 24, 1991 used electric fringing fields from interdigital electrodes at high temperatures to produce surface inverted ferroelectric domain regions. Matsumoto reports a corrugation on the surface produced by the inversion operation of 20 nm, significant enough to cause waveguide losses. The high temperatures for this process, in conjunction with the electric fields applied cause diffusion of the electrode into the surface of the substrate which affects the nonlinear properties and significantly induces photorefraction. The ferroelectric materials also become significantly conducting at high temperatures.

Myers et al have presented work at the Center for Nonlinear Optical Materials, Stanford, CA July, 1993, entitled "High Voltage Repoling of Lithium Niobate". This work on LiNbO₃ crystals 0.5 to 1 mm thick involved both metal and dissolved salt electrodes, and pulsed electric fields much higher than the coercive field of the material for very short times. For the metal patterned electrodes, control of the domain shape is achieved by electric field pulse length and the number of pulses. The uniformity of the repoled regions was increased by the use of liquid electrodes. Patterned repoled regions in lithium niobate were achieved only through the use of patterned metal electrodes, as taught by Yamada, et al. Patterning of the liquid electrodes is nearly impossible for the dimensions required in efficient SHG.

The inversion of ferroelectric domain regions reproducibly is key to the development of SHG devices. Low efficiencies of conversion are primarily due to one or more of three primary defects: poor overlap of inverted region with waveguide, decreased NLO coefficients in inverted regions due to chemical or photorefractive effects, or poor control of domain shape, depth, and duty cycle. Chemical diffusion processes result in triangular or semicircular domain shapes which do not provide the optimum conditions for quasi-phase matching, and also can introduce refractive index variations. Both effects lead to decreased conversion efficiencies. On the other hand, existing electric field domain inversion techniques suffer from irreproducibility, electrode interactions, and nonuniformities in the inverted domain patterns, all of which are attributes of an uncontrollable process and poor efficiencies result.

### SUMMARY OF THE INVENTION

The object of this invention is to provide an improved process for producing inverted ferroelectric domain regions in a ferroelectric material having a predetermined surface pattern, with the interfaces between the inverted domain volumes being an extension of said surface pattern. Another object of this invention is to provide inverted ferroelectric domain regions with more desirable shapes and deeper into the material than those found through the use of chemical diffusion processes. Another object of this invention is to lower the probabilities of surface damage or catastrophic breakdown. Yet another object is to provide large area inverted ferroelectric domain regions which can be quickly and reproducibly formed without several additional process steps. Yet another object is to provide a process which forms inverted ferroelectric domain regions that can be used either in waveguide or bulk applications.

It has been discovered, quite unexpectedly that patterns of inverted ferroelectric domain regions can be formed by inhibiting the growth of said domains in adjacent regions.

This objective is achieved by a method for forming inverted ferroelectric domain regions in a substrate including ferroelectric material and having two major opposite surfaces, the method comprising the steps of:
a. chemically modifying the substrate in selected regions to inhibit subsequent nucleation and growth of selected domains;
b. applying a conductive electrode over said opposite major surfaces; and
c. providing a voltage to the conductive electrodes having a sufficient magnitude and duration to cause the ferroelectric polarization to invert in selected unmodified regions.

The following are advantages of the present invention. Deep, straight-walled inverted ferroelectric domain regions can be easily produced, often extending through the crystal thickness that duplicate the surface pattern, eliminating the problems with domain depth and ultimate domain shape encountered by chemical diffusion processes. This process is carried out at room temperature, lessening the chances for contamination of the material surfaces. In this process applied voltages can be the minimum required for ferroelectric domain inversion, minimizing the probability of catastrophic dielectric breakdown, surface damage, or lateral growth of domain regions. The process is applicable for large area inverted ferroelectric domain regions in surface or bulk applications. The simplest processing steps to date are described in this invention; features finer than 1 µm have been demonstrated.

### BRIEF DESCRIPTION OF THE DRAWINGS

FIG. 1A-C provides various steps in forming an inverted ferroelectric domain structure device in accordance with this invention;
FIG. 2 shows the resultant inverted domain structure formed in the substrate of the device formed by the FIGS. 1A-C process;
FIG. 3A-C provides alternative various steps in forming an inverted ferroelectric domain structure device in accordance with this invention;
FIG. 4 shows the resultant inverted domain structure formed in the substrate of the device formed by the FIGS. 3A-C process; and
FIGS. 5A and B are plots which respectively show for the 1A-C and 3A-C devices representative current v. voltage across the substrate which demonstrate the switching of the ferroelectric domains.

### DESCRIPTION OF THE PREFERRED EMBODIMENTS

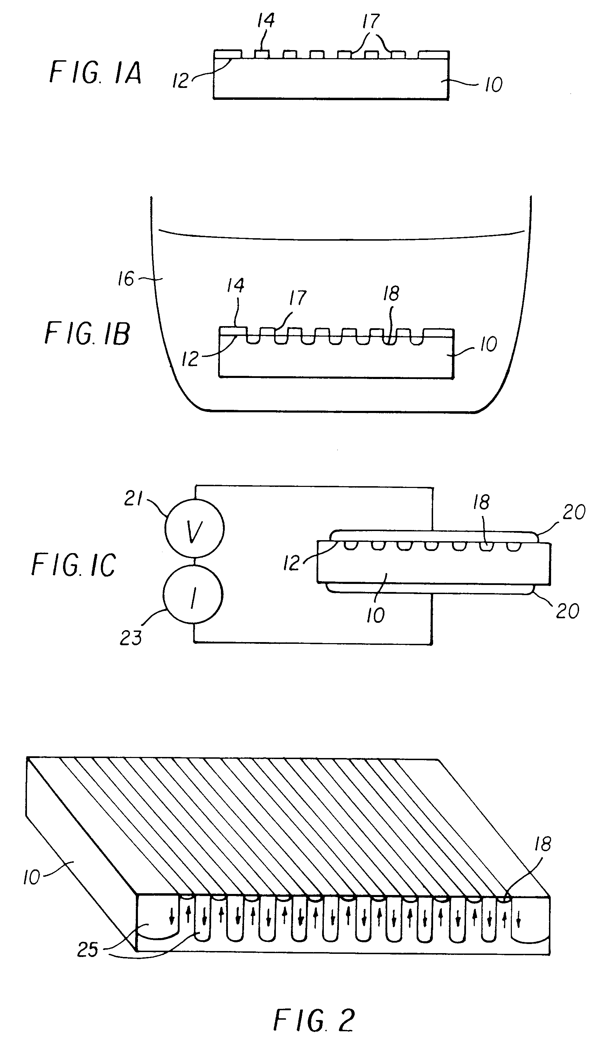

Turning first to FIG. 1A there is provided a substrate 10 which is made of a ferroelectric material such as lithium tantalate, lithium niobate or potassium titanyl phosphate (KTP). The substrate can include any ferroelectric material which exhibits useful optical properties. The top surface 12 is first cleaned by sequential immersion in cleaners and solvents such as dilute isoclean, acetone, and 2-propanol under ultrasonic power followed by a dip in HF + 2HNO₃ and deionized water rinse or other suitable standard semiconductor cleaning procedure. A mask material 14 is applied onto surface 12 such as by a conventional sputtering technique. The mask material 14 can be, for example, tantalum, aluminum and SiO₂. A photoresist layer (not shown) is applied over the mask material 14 and patterned to provide openings. An acid or ion beam etch is used to remove the mask material 14 through the openings in the photoresist down to the surface of the substrate 12. The photoresist layer is then removed and what remains is a pattern of openings 17 formed in the mask material 14. Alternatively, the photoresist layer can be applied to the optically clean surface of the substrate 12 and patterned through image reversal processes to yield openings 17 to the surface of the substrate 12. The mask material 14 can then be applied over the photoresist pattern by evaporation technique and subsequent dissolution of the photoresist layer lifts off the unwanted mask material 14.

As shown in FIG. 1B, doping material 16 is provided through the openings 17 in the mask material 14 to chemically modify the ferroelectric substrate in selected regions 18 under the openings. Alternatively, in a case not shown, the mask material 14 may contain a dopant material 16. In this case, the regions 18 will be located beneath the mask material 14. Examples of materials 16 are protons, titanium, niobium, magnesium, tanlalum, helium, lithium, cesium, rubidium, Nb₂O₃, Ta₂O₃. The doping materials alter the Curie temperature of the regions 18, render an alteration in the crystalline structure of the regions 18, and render an alteration in the ferroelectricity of the regions 18.

Dopant materials 16 can be introduced by methods such as ion exchange by immersion in selected acids and molten salts heated to elevated temperatures such as pyrophosphoric and benzoic acids and ion implantation followed by removal of the mask material 14 by immersion in suitable solvents such as HF and dilute acid. The substrate can then be heat treated to initialize inverted domains in the doped regions 18. Alternatively, chemical dopant 16 and the formation of initialized inverted domains in the doped regions 18 can be achieved simultaneously by diffusion of the desired species out of the substrate 10 at elevated temperatures, and in the case not shown where the mask material 14 and dopant material 16 coincide, diffusion of the mask material into the substrate 10 at elevated temperatures.

Another alternative method to chemically modify the ferroelectric substrate 10 is to remove a constituent of the substrate material in a patterned fashion. The removal of lithium from lithium niobate is commonly practiced. In this method, an impermeable mask 14 of materials such as SiO₂ and Al₂O₃ is used and the substrate is heated to high temperatures around 1000°C. The volatile lithium atoms escape from the substrate in the regions not covered by the mask material 14, generating the chemically modified regions 18. Other constituents that can be removed in a patterned fashion to chemically modify the substrate are selected in the group consisting of O, Nb, Ta, K, Ti and P.

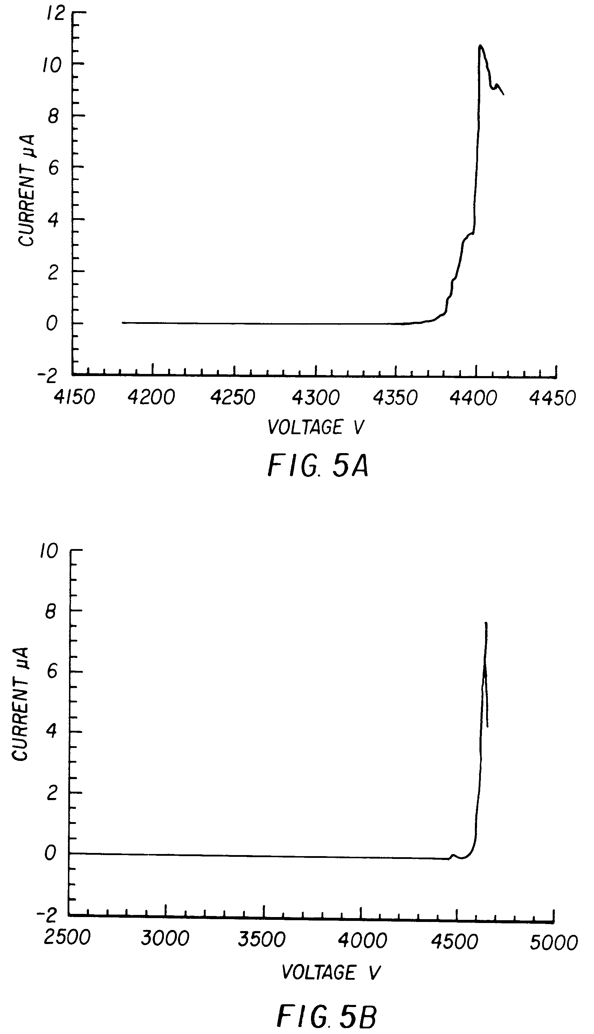

As shown in FIG. 1C, a conductive contact 20 is now applied to both surfaces of the substrate 10. This conductive contact 20 can be composed of dissolved salts, such as Mg(NO₃)₂·6H₂O, MgSO₄, NaCl, and other soluble alkali and alkaline earth salts in water and metals, such as Au, Al, Ag, Pt, Ta, In, Pd, Ga, Ti, Nb and other similar metal or metal oxides The voltage source 21 supplies a ramped voltage. The voltage can be applied as DC, or pulse of magnitude equal to or greater than the coercive voltage of the ferroelectric material and of duration of from 0,001 to 10,000 msec. The current caused by the ramped voltage is sensed by a current monitor 23. FIG. 5A depicts a typical ramped voltage on the x axis and the sensed current on the y axis. When the voltage from the source 21 is at a sufficient magnitude to cause ferroelectric domain regions to invert, the magnitude of the current increases. The total charge which flows is proportional to the dimensions of the inverted ferroelectric domain regions which is measured by the current sensor 23. As a result of this process, it has become clear that this increase in current flow can be predicted. By this manner, inversion of ferroelectric domains is monitored, and the voltage ramp is leveled off at the onset of current and subsequently turned off after a predetermined charge flow. This can be accomplished either manually or automatically. The conductive contact 20 is now removed by immersion in suitable solvent such as water and dilute acid. The resultant device is shown in FIG. 2. It will be noted that there are arrows which alternate in different directions and these depict the direction of inverted domains 25 of the substrate 10.

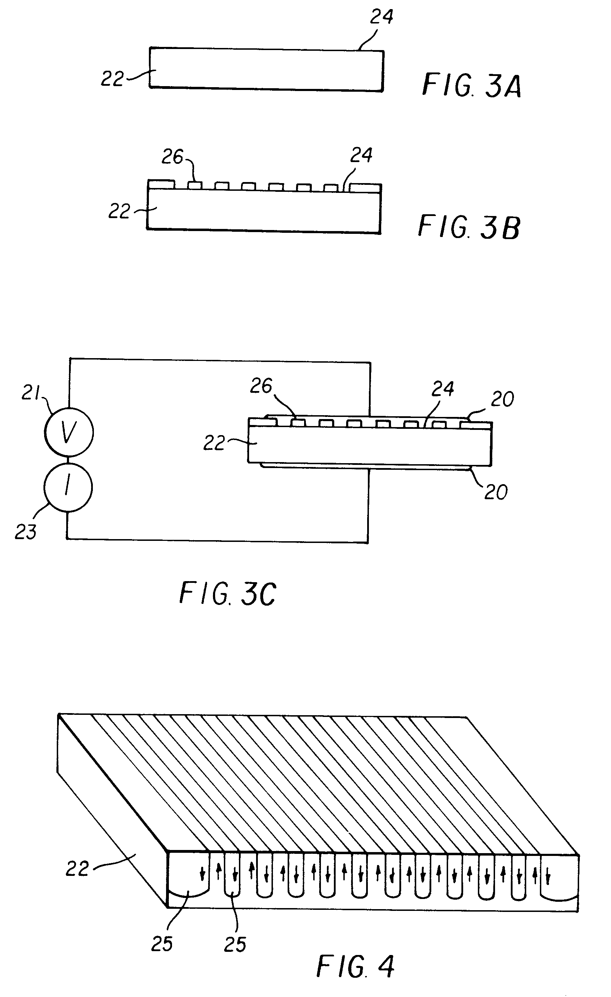

In another embodiment of the invention shown in FIG. 3A, a similar substrate 22 which is made of a ferroelectric material such as, for example, lithium tantalate, lithium niobate and potassium titanyl phosphate (KTP). The substrate can include any ferroelectric material which exhibits useful optical properties. The top surface 24 is first cleaned by sequential immersion in cleaners and solvents such as dilute isoclean, acetone, and 2-propanol under ultrasonic power followed by a dip in HF + 2HNO₃ and deionized water rinse or other suitable standard semiconductor cleaning procedure. A mask material 26 is applied to the surface 24, such mask material may be a photoresist layer processed by conventional techniques to provide openings 17 to the surface 24 (See Fig. 3B).

Alternatively, similar nonconductive materials such as Al₂O₃, SiO₂, or organic films as mask materials 26 may be applied to the surface 24 by conventional processes such as sputtering and spin coating. A photoresist layer (not shown) is then applied onto the mask material 26, and patterned by conventional photolithography to provide openings to the mask material 26. The mask material 26 may then be removed in the open areas by means such as acid or ion beam etch. The photoresist layer is then removed by dissolution in suitable solvent. Alternatively, the photoresist layer can be applied to the clean surface of the substrate 24 and patterned through image reversal processes to yield openings to the surface of the substrate 22. The mask material 26 can then by applied over the photoresist pattern by evaporation technique and subsequent dissolution of the photoresist layer lifts off the unwanted mask material 26.

In FIG. 3C where parts correspond to those in Fig. 1C, the same numerals will be used. As shown, a continuous conductive contact 20 is applied to each of the surfaces of the substrate 22 covering the mask 26 and filling the openings 17 in the mask 26. The conductive contact 28 may be composed of dissolved salts, such as Mg(NO₃)₂·6H₂O, MgSO₄, NaCl, and other soluble alkali and alkaline earth or metal salts in water and metals, such as Au, Al, Ag, Pt, Ta etc., and other materials as indicated for the conductive contact of Fig. 1C. The voltage source 21 supplies a ramped voltage. The current caused by the ramped voltage is sensed by a current monitor 23. FIG. 5B depicts a typical ramped voltage on the x axis and the sensed current on the y axis. When the voltage reaches sufficient magnitude to cause ferroelectric domain regions to invert, the magnitude of the current increases. The total charge which flows is proportional to the dimensions of the inverted ferroelectric domain regions, and can be predicted by the remnant polarization of the substrate 22. By this manner, inversion of ferroelectric domains is monitored, and the voltage ramp is leveled off at the onset of current and subsequently turned off after a predetermined charge flow. The conductive layer 20 and the mask material 26 are now removed by immersion in suitable solvents such as water, dilute acid and acetone. The resultant device is shown in FIG. 4. It will be noted that there are arrows which alternate in different directions and these depict the direction of the inverted domains of the substrate 22.

### EXAMPLES

To determine domain inversion in the devices prepared in the examples which follow, the devices were sliced and polished in cross section along the xz plane. Devices were etched in 90 degree HF and HNO₃ in 1:2 ratio for 5 to 10 minutes. The +z oriented and -z oriented domains etch at different rates along the y and z axes revealing the domain structure.

### EXAMPLE 1

A SAW grade z-cut crystal of LiTaO₃ with optically polished surfaces 0.5 mm thick was purchased and cut into 1.4 cm squares. 300 Å of Ta was sputtered onto the -z surface. Photoresist was contact exposed through a grating mask of 10.8 µm period. The exposed photoresist was developed and postbaked to harden it. The Ta was removed from between the photoresist stripes by argon ion etching. After etching, the photoresist was removed, and a Ta grating mask remained on the substrate surface.

Protons were exchanged for lithium ions in the surface of the substrate in the areas that were not masked by the Ta stripes. Proton exchange was carried out in 260°C pyrophosphoric acid for 30 minutes. The substrate and acid were preheated to 260°C at which time the substrate was immersed in the acid for 30 minutes and removed from the acid for cooling. After rinsing the cooled substrate in water, the Ta mask was removed by immersing the substrate in 1:2 HF + HNO₃ at room temperature for 20 seconds. The layer on the reverse (+z) surface of the substrate that had been proton exchanged was removed by mechanically polishing to an optical finish. The final thickness of the substrate was approximately 200 µm. The sample was annealed at 510° to 520°C for 20 seconds with a heating rate of approximately 18°C/sec. and a cooling rate of approximately 1°C/sec. to 430°C at which temperature the cooling proceeded naturally.

Conductive electrodes composed of 2.0 gm Mg(NO₃)₂·6H₂O dissolved in 20 ml H₂O were applied as droplets to both sides of the substrate and continuity was established with brass probes. The voltage across and current through the substrate were monitored and also the current monitored versus time. A DC ramp of approximately 100 to 200 volts per second was applied up to approximately 10 KV at which time the ramp was decreased to approximately 10 to 30 volts per second. Upon the current increase due to the onset of domain inversion, the DC voltage was held constant for several seconds and after sufficient charge had passed the circuit opened to stop current flow. The conductive electrodes were washed off with water. The resultant inverted domain pattern grating was within the contact area of approximately 1 mm x 3 mm and had triangular walls extending 60 to 80 microns into the substrate.

### EXAMPLE 2

A SAW grade z-cut crystal of LiTaO₃ with optically polished surfaces 0.5 mm thick was purchased and cut into 1.4 cm squares. 300 Å of Ta was sputtered onto the -z surface. Photoresist was contact exposed through a grating mask of 3.6 µm period. The exposed photoresist was developed and then hardened by postbaking it. The Ta was removed from between the photoresist stripes by argon ion etching. After etching, the photoresist was removed, and a Ta grating mask remained on the substrate surface.

Protons were exchanged for lithium ions in the surface of the substrate in the areas that were not masked by the Ta stripes. Proton exchange was carried out in 260°C pyrophosphoric acid for 20 minutes. The substrate and acid were preheated to 260°C at which time the substrate was immersed in the acid for 20 minutes and removed from the acid for cooling. After rinsing the cooled substrate in water, the Ta mask was removed by immersing the substrate in 1:2 HF + HNO₃ at room temperature for 20 seconds.

Inverted domain regions were formed on the -z surface of the substrate by rapid thermal annealing (RTA). The sample was annealed at 540° to 550°C for 20 seconds with a heating rate of approximately 18°C/sec. and a cooling rate of approximately 1°C/sec. to 430°C at which temperature the cooling proceeded naturally. This thermal treatment provided semicircular inverted domain regions of approximately 1.0 to 1.3 µm depth and 2.0 to 2.8 µm width. The substrate was then annealed at 400°C for 6 hours to diffuse the proton exchange regions. The layer on the reverse (+z) surface of the substrate that had been proton exchanged was removed by mechanically polishing to an optical finish. The final thickness of the substrate was approximately 200 µm.

Conductive electrodes composed of 2.0 gm Mg(NO₃)₂·6H₂O dissolved in 20 ml H₂O were applied as droplets to both sides of the substrate and continuity was established with brass probes. The applied voltage and current through the substrate were monitored. Also monitored were the current versus time parameters. A DC ramp of approximately 100 to 200 volts per second was applied up to approximately 3.6 KV at which time the ramp was decreased to approximately 10 to 30 volts per second. Upon the current increase due to the onset of domain inversion the DC voltage was held constant for several seconds and after sufficient charge had passed the circuit opened to stop current flow. The conductive electrodes were washed off with water. The resultant inverted domain grating pattern was within a circle approximately 2.8 mm in diameter corresponding to the electrode contact area and had vertical walls through the substrate thickness.

The substrate was then polished on two sides parallel to the grating lines and measurements of the second harmonic generation efficiency for the bulk crystal were measured using a Ti-Sapphire laser beam focused on the poled region of the substrate. The wavelength of the laser was varied from 804 to 880 nm and the second harmonic output power was monitored. The maximum second harmonic output occurred at an input wavelength of 836 nm and had an efficiency of 0.12%/W-cm. Optimization of the processing and shape of the poled regions could lead to much higher power outputs.

### EXAMPLE 3

A SAW grade 1.4 cm square piece of LiTaO₃ was mechanically polished to a thickness of 250 µm. Both sides of the z-oriented crystal had optical-quality finishes. A layer of photoresist was applied and exposed with a dark field mask having 20 to 200 µm openings. After standard photoresist development and postbake, conductive electrodes composed of 2.0 gm Mg(NO₃)₂·6H₂O dissolved in 20 ml H₂O were applied as droplets to both sides of the substrate and continuity was established with brass probes. The voltage across and current through the substrate were monitored and also the current monitored versus time. A DC ramp of approximately 100 to 200 volts per second was applied up to approximately 4.5 KV at which time the ramp was decreased to approximately 10 volts per second. Upon the current increase due to the onset of domain inversion the DC voltage was held constant for several seconds and after sufficient charge had passed the circuit opened to stop current flow. The conductive electrodes were washed off with water. Etching revealed domain inversion had occurred through the substrate in the regions where the holes in the photoresist existed. Reproduction of the pattern was excellent.

### EXAMPLE 4

LiNbO₃ crystal was mechanically polished to a thickness of 200 µm. Ti metal was evaporated onto the +z surface 60 Å thick and patterned by standard photolithography and acid etch. The substrate was placed in an alumina boat positioned on Pt foil surrounded by LiNbO₃ powder. The substrate was heated at a rate of approximately 40°C/min. to 1100°C, soaked for 1 hour, and the furnace was turned off and allowed to cool naturally. This produced inverted domain Ti-diffused regions corresponding to the pattern on the +z face of the crystal.

Conductive electrodes composed of 2.0 gm Mg(NO₃)₂.6H₂O dissolved in 20 ml H₂O were applied as droplets to both sides of the substrate and continuity was established with brass probes. The voltage across and current through the substrate were monitored and also the current monitored versus time. A DC ramp of approximately 100 to 200 volts per second was applied up to approximately 3.4 KV at which time the ramp was decreased to approximately 10 volts per second. Upon the current increase due to the onset of domain inversion the DC voltage was held constant for several seconds and after sufficient charge had passed the circuit opened to stop current flow. The conductive electrodes were washed off with water. Etching revealed domain inversion had occurred through the substrate in the regions where the Ti-diffused regions were absent. Reproduction of the pattern was excellent.

### PARTS LIST

- 10: substrate
- 12: optically clean surface
- 14: mask material
- 16: dopant material
- 17: openings
- 18: doped region
- 20: conductive layer
- 21: voltage source
- 22: substrate
- 23: current sensor
- 24: optically clean surface
- 25: inverted domains
- 26: mask material

## Claims

1. A method for forming inverted ferroelectric domain regions in a substrate including ferroelectric material and having two major opposite surfaces, said method comprising the steps of:
a. chemically modifying the substrate in selected regions to inhibit subsequent nucleation and growth of selected domains;
b. applying a conductive electrode over said opposite major surfaces; and
c. providing a voltage to the conductive electrodes having a sufficient magnitude and duration to cause the ferroelectric polarization to invert in selected unmodified regions.

2. A method for forming inverted ferroelectric domain regions in a substrate including ferroelectric material having two major opposite surfaces, said method comprising the steps of:
a. forming a domain control pattern in one of said two major surfaces of said substrate, said pattern inhibiting the nucleation and growth of selected domains;
b. applying a conductive electrode over said two major opposite surfaces; and
c. providing a voltage to the conductive electrodes having a sufficient magnitude and duration to cause the ferroelectric polarization to invert in selected regions.

3. A method for forming inverted ferroelectric domain regions in a ferroelectric material, said method comprising the steps of:
a. forming and patterning a nonconductive layer on a ferroelectric substrate with such pattern being characterized with openings to the material;
b. applying a conductive layer over the nonconductive layer filling in the openings on said surface and the surface opposite on the ferroelectric material; and
c. applying a voltage to the conductive electrodes having a sufficient magnitude and duration to cause the ferroelectric polarization to invert in selected regions beneath the openings in accordance to said domain control pattern.

4. The invention as set forth in claim 1 wherein the chemical modification is achieved by doping the ferroelectric material.

5. The invention as set forth in claim 1 wherein the chemical modification is achieved by removing a constituent of the ferroelectric material.

6. The invention as set forth in claim 4 wherein the dopant is selected from the group consisting of: H, Nb₂O₃, Ta₂O₃, Ti, Nb, Ta, Rb, Cs, Si, Mg, Li, and He.

7. The invention as set forth in claim 5 wherein the constituent removed is selected from the group consisting of Li, O, Nb, Ta, K, Ti, and P.

8. The invention as set forth in claim 1 wherein the conductive electrode is selected from the group consisting of: Au, Ag, Pt, Pd, Al, Ga, In, Ta, Ti, Nb, and other similar metal and metal oxides and soluble alkali, alkaline earth and metal salts.

9. The invention as set forth in claim 1 wherein the voltage is applied as DC, ramp, or a pulse of magnitude equal to or greater than the coercive voltage of the ferroelectric material and of duration from .001 to 10,000 msec.

10. The invention as set forth in claim 2 wherein the conductive electrode is selected from the group consisting of: Au, Ag, Pt, Pd, Al, Ga, In, Ta, Ti, Nb, and other similar metal and metal oxides and soluble alkali, alkaline earth and metal salts.
